# EUROPÄISCHE PATENTANMELDUNG

(11) **EP 2 096 094 A1**
(43) Veröffentlichungstag der Anmeldung: **02.09.2009**
(21) Anmeldenummer: 09153777.9
(22) Anmeldetag: 26.02.2009
(51) Int. Cl.: C05G 3/02, A01N 65/08, A01P 9/00, A01N 25/00

(54) **Mittel und Langzeitdünger mit Abschreckwirkung gegen Schnecken**

(30) Priorität: 28.02.2008 DE 102008011760
(71) Anmelder: Moser, Josef, 85435 Erding (DE)
(72) Erfinder: Moser, Josef, 85435 Erding (DE)
(74) Vertreter: Winter, Brandl, Fürniss, Hübner Röss, Kaiser, Polte Partnerschaft Patent- und Rechtsanwaltskanzlei

(57) **Zusammenfassung**

Um ein Mittel mit langanhaltender Abschreckwirkung gegen Schnecken oder molluskizider Wirkung zu erhalten, das ansonsten toxikologisch unbedenklich und einfach auszubringen ist, wird ein vorwiegend pflanzliches Ausgangsmaterial zerkleinert und zumindest teilweise fermentiert, danach homogenisiert, wobei Pflanzenmaterial und/oder Pflanzenextrakt von Früchten von Sapindus mukorossi zugegeben werden und schließlich geeignet portioniert. Zum Erhalt eines Langzeitdüngers mit Abschreckwirkung gegen Schnecken wird vor dem Portionieren zusätzlich ein Düngemittel zugegeben.

## Beschreibung

Die vorliegende Erfindung betrifft ein Verfahren zur Herstellung eines Mittels mit langanhaltender Abschreckwirkung gegen Schnecken oder molluskizider Wirkung auf Basis von vorwiegend pflanzlichem Material gemäß Patentanspruch 1 und zur Herstellung eines Langzeitdüngers mit gleichzeitiger Abschreckwirkung gegen Schnecken gemäß Patentanspruch 2 sowie das Mittel und den Langzeitdünger selbst gemäß den Patentansprüchen 29 bzw. 30.

Im privaten als auch im landwirtschaftlichen Nutz- und Gartenanbau ist die Gefräßigkeit von Schnecken, sowohl von Nackt- als auch von Gehäuseschnecken bekannt. Die wichtigsten Gastropoden werden im Folgenden kurz diskutiert (vgl.: www.bio-gaertner.de/Articles/II.Pflanzen-allgemeineHinweise/Schaedlinge/Schnecken.html):
1) **Grosse Rote, Schwarze Wegschnecke** (Arion ater, rufus). Rote, rotbraune, braune bis schwarze Farbe, in der Jugend meistens heller. Haut runzelig, 5 - 10 cm lang. Farbloser Schleim. Paarung Ende August - Ende September. Eier 3 - 4 mm, kalkweiß, rund 300 Stck. je Schnecke in kleinen Häufchen. Eine Generation je Jahr. Reifezeit 3 - 4 Wochen. Jungtiere schlüpfen bei warmer Witterung vor Wintereinbruch, sonst im Frühjahr (März/April). In Hecken, Wäldern und Wiesen. Sie hat Vorliebe für junge Setzlinge, Aas, Pilze, Verrottendes. Nicht sehr sesshaft. Sie liebt hohe Vegetation mit feuchtem Mikroklima. Tagaktiv, überwintert je nach Art als Ei oder Tier in frostfreien Verstecken.
2) **Kapuzinerschnecke** (Spanische Wegschnecke, Arion lusitanicus). In den 60ern aus Südspanien eingeschleppt, ähnlich der Grossen Roten Wegschnecke gemäß 1), wird jedoch bis 18 cm groß. Unterscheidung schwer: Jungtiere bei 1) weißlich, bei 2) gestreift in braun, gelb, grau und orange. Die ausgewachsenen Tiere sind schmutzig graugrün, braun oder ziegelrot. Zwei Generationen im Jahr mit jeweils bis zu 400 Eiern. Sie schlüpfen im Herbst und überwintern, werden also den Frühsaaten gefährlich. Fressfeinde verfolgen sie weniger, weil sie zäher und schleimreicher sind. Sie verdrängen die Grosse Rote Wegschnecke in Deutschland. Sie fressen große Mengen von Grünzeug, gern zarte Jungpflanzen, verletzte oder kranke Pflanzen, Vogel- und Hundedreck, Aas, auch von toten Artgenossen. Salat- oder Kohlpflanzen werden vollständig aufgefressen, ehe die nächsten Pflanzen heimgesucht werden. Sie sind unempfindlicher gegen Licht und Trockenheit.
3) **Gartenwegschnecke** (Arion hortensis). 2,5 - 4 cm lang. (Blau-)schwarz, Sohle gelblich. Sie lebt direkt unter der Erdoberfläche. Paarung Ende September. Eier 2 mm, eiförmig, Schale durchsichtig. Ablage 11 - 12, manchmal bis ins Frühjahr, etwa 10 - 50 Stück in Erdhöhlen oder an Pflanzenwurzeln. Larven schlüpfen Anfang April bis Mai. 5 - 6 Jungschnecken (Tauschnecken), leben unterirdisch. Schaden im Mai am größten. Bei feuchtwarmer Witterung kriechen erwachsene Schnecken auf die Pflanzen. Sie fressen nachts mehrmals mit Ruhepausen. Meist sesshaft. Schädigen vor allem Wurzeln und Keimlinge und Speicherorgane im Wurzelbereich (Karotten, Kartoffeln, Rüben, Kohl). Schaden in kälterer Zeit am größten. Sie sind kälteresistenter als die Grosse Wegschnecke.
4) **Genetzte Ackerschnecken** (Deroceras reticulatum). 3.5 - 5 cm. Gelblichweiß, schiefergrau, braun, oft mit dunkler Netzzeichnung. Schleim kalkweiß. Haut gerunzelt, Sohle hell. Jungschnecken sind heller. Nach Schlüpfen durchscheinend. Paarung im Herbst an einem feuchten Platz. Eier 1 - 2 mm rund oder oval, 10 - 40 Stück, einige unter der Erde, andere an Pflanzenwurzeln. Junge schlüpfen April bis Mai. Nur bei günstigen Bedingungen zwei bis drei Generationen je Jahr. Sie sind besonders auf Feuchtigkeit angewiesen. Leben meist oberirdisch, klettern bei Nässe und Regen auf die Pflanzen bis 1 m hoch, gefährden alle Pflanzenteile, fressen auch an Samen und Blüten. Da sie lichtempfindlich sind, sind sie nachtaktiv, meistens am Beginn der Nacht, auch noch bei 0 °C. Bei trockenem Wetter fressen sie Wurzeln ab (z.B. Möhren). Sie sind im Herbst am schädlichsten. Sie verkriechen sich gern in Bodenspalten oder unter Holz und Steinen, auch in Kohl- und Salatpflanzen. Sie sind sesshaft. Sterben durch starken Frost. Lockerer, feinkrümeliger Boden ist für sie ungünstig. Sie bevorzugen chlorophyllfreie Nahrung, fressen auch verholzte Pflanzenteile.
   Die Nacktschnecken 1) - 4) hinterlassen Schleimspuren, die aber von Bodenbakterien umgewandelt werden. Sie sind Allesfresser, fressen Löcher in die Pflanzenblätter, fressen auch ganze Pflanzen ab, vor allem auch aufgehende Saat und nicht abgehärtete Jungpflanzen, alles Verwesende und Welkende, tote Kleintiere, auch der eigenen Art. Die angefressenen Pflanzen bilden sehr oft eine Eingangspforte für viele andere Schädlinge. Sie halten sich tagsüber in feuchten, dunklen Verstecken auf, von denen aus sie nachts ihre Futterpflanzen in der Nähe aufsuchen. Die Vermehrung der Schnecken wird begünstigt durch feuchtes und warmes Wetter, abendliches Giessen, feuchten Mulch, z.B. frisches Gras. Eine Schnecke frisst in einer Nacht etwa die Hälfte ihres Körpergewichtes. Sie kann Wasser über ihre Haut aufnehmen. Sie überwintern - meistens befruchtet - in der Erde, die Jungen fressen dann im Mai an den Pflanzen. Zwei Generationen im Jahr bei guten Bedingungen sind möglich, bei der Ackerschnecke sogar drei. - Grosse Schnecken wie 1) und 2) legen in einer Nacht bis zu 25 m zurück.
**5) Gehäuseschnecken.** Verschiedene Arten. Helicidae. Die Schnirkelschnecken (Gattung Cepaea) mit ihren gebänderten Häuschen sind genauso gefräßig wie die Nacktschnecken, aber sie fressen vorzugsweise Abgestorbenes. Die Weinbergschnecke (Helix pomatia) ist am bekanntesten, sie ist geschützt. Sie lebt auf kalkhaltigem Boden, überwintert 30 cm tief im Boden. Gehäuse weiß bis gelb-braun, bis 40 mm. Es wird mit einem Kalkdeckel im Winter verschlossen. Alter bis zu 7 Jahren. Langdauernde Paarung im Mai mit etwa 10 mm langen "Liebespfeilen" aus Kalk. Ab 3.- 4. Lebensjahr legen sie bis zu 70 Eier 6 - 8 in Erdlöchern ab. Die Eier sind etwa 5 - 6 mm groß. Vorkommen in Feld, Garten, Wiese. Sie fressen Kohl, Salat, Spinat, aber meistens tote organische Stoffe, Angerottetes und Verwelktes, und auch die Eigelege der Nacktschnecken 1) - 4). Den notwendigen Kalk entnehmen sie über kalkreiche Kräuter oder direkt dem kalkigen Boden mit Hilfe einer Säureabsonderung.

Um das "Schneckenärgernis" in den Griff zu bekommen, hat es nicht an Versuchen gefehlt, die Schnecken mit Hilfe "chemischer Keulen" abzuschrecken oder abzutöten. Hier haben sich ganz besonders Kupferpräparate sowie die synthetischen Molluskizide Niclosamid sowie Metaldehyd bewährt. Bei der Anwendung der letztgenannten Molluskizide ergeben sich jedoch einerseits Probleme mit der Schwermetallbelastung der zu schützenden Nutzpflanzen für die Kupferpräparate und andererseits Toxizitätsprobleme für die synthetischen Molluskizide für Kinder sowie Nutz- und Haustiere.

Aufgrund der ökologischen Nebenwirkungen der chemischen Molluskizide, hat es auch nicht an Versuchen gefehlt, pflanzliche Schneckenabwehrmittel einzusetzen, allerdings mit bislang eher geringem Erfolg.

Aus der Seminararbeit von Hannah Bergmann, Wintersemester 2005/2006, der Bayerischen Julius-Maximilians-Universität Würzburg, Lehrstuhl für Lebensmittelchemie, Prof. Dr. Peter Schreier, ist bekannt, Saponin-haltige Extrakte aus den Früchten des Waschnussbaums *Sapindus mukorossi,* d. h. den Waschnüssen, als Molluskizid gegen einen Reisschädling, nämlich die Wasserschnecke Pomacea canaliculata (Apfelschnecke) in Taiwan im Laborversuch wie auch in einem 3 m x 3 m Reisversuchsfeld erfolgreich einzusetzen.

Neben der Wirksamkeit eines Mittels gegen Schnecken ist es für den Endanwender bedeutend, wie aufwändig dessen Anwendung sich in der Praxis gestaltet. Das heißt, auf welche Art und wie oft ist das Mittel auszubringen und wie lange ist es nach der Ausbringung wirksam. Bei der Verwendung eines in einer Flüssigkeit gelösten Wirkstoffes oder eines festen Wirkstoffes, der wasserlöslich ist, wird das Mittel durch Regen oder durch Bewässern der zu schützenden Pflanzen relativ schnell ausgewaschen, so dass eine häufige und regelmäßige Ausbringung des Mittels notwendig wird. Dies ist sowohl arbeitsintensiv als auch unwirtschaftlich.

Es war somit die Aufgabe der vorliegenden Erfindung, ein Produkt mit Landschnecken-abschreckender oder molluskizider Wirkung, das ansonsten toxikologisch unbedenklich ist und das einfach auszubringen und über einen langen Zeitraum wirksam ist, sowie ein Verfahren zur Herstellung dieses Produkts zur Verfügung zu stellen.

Die Lösung dieser Aufgabe erfolgt verfahrenstechnisch durch die Merkmale des Patentanspruchs 1 und in Bezug auf ein Mittel mit möglichst langanhaltender Abschreckwirkung gegen Landschnecken durch die Merkmale des Patentanspruchs 29.

Um die Ausbringung des oben genannten Mittels weiter zu erleichtern, verfolgte der Anmelder der vorliegenden Erfindung darüber hinaus die Idee ein Produkt und ein Verfahren zu dessen Herstellung zu entwickeln bei dem die Funktionen einer Abschreckwirkung gegen Landschnecken und einer Düngewirkung kombiniert vorliegen, so dass das resultierende Produkt einerseits Schnecken abschreckt und andererseits die vor den Schnecken zu schützenden Pflanzen mit den zum Wachstum notwendigen Nährstoffen versorgt. Wenn das resultierende Produkt darüber hinaus diese beiden Wirkungen über eine möglichst langen Zeitraum nach der Ausbringung aufrecht erhält, wäre damit ein Langzeitdünger verfügbar, der nach seiner Ausbringung eine zusätzlich Ausbringung eines Mittels zur Schneckenabwehr überflüssig macht.

Ein derartiger Langzeitdünger mit gleichzeitiger Abschreckwirkung gegen Schnecken oder molluskizider Wirkung ist durch ein Verfahren mit den Merkmalen des Patentanspruchs 2 zugänglich und als solches mit Patentanspruch 30 beansprucht.

Die Herstellung von biologisch abbaubaren Pellets auf Basis von pflanzlichem Material - wenn auch zu anderen Zwecken - ist beispielsweise aus der DE 44 24 403 B4 bekannt. Dort wird eine Bio-Masse auf Basis von pflanzlichem Material beschrieben, welche zu biologisch abbaubaren Gegenständen, wie Verpackungsmaterialien, Bremsbelägen, Armaturenbretter usw. verarbeitet werden kann. Eine Verwendung dieses Materials im Zusammenhang mit der Abwehr von Schnecken ist dort weder offenbart noch angedacht.

Auf Basis dieser Bio-Masse wird durch Zugabe von Pflanzenmaterial, z. B. in Form von Schalen, der Früchte von *Sapindus mukorossi* ein Mittel mit schneckenabschreckender und/oder molluskizider Wirkung erhalten, das toxikologisch unbedenklich und kostengünstig herstellbar ist. Ferner wird durch die relativ langsame Zersetzung der Bio-Masse beim Kontakt mit dem Erdreich diese Wirkung über einen langen Zeitraum aufrechterhalten.

Wird darüber hinaus noch ein Düngemittel zugegeben, so wird ein Langzeitdünger mit gleichzeitiger Abschreckwirkung gegen Schnecken oder molluskizider Wirkung erhalten.

Das Verfahren der vorliegenden Erfindung zur Herstellung eines Mittels mit langanhaltender Abschreckwirkung gegen Schnecken oder molluskizider Wirkung auf Basis von vorwiegend pflanzlichem Material umfasst die folgenden Schritte:
a. Zerkleinern von vorwiegend pflanzlichem Ausgangsmaterial;
b. Fermentieren von zumindest einem Teil des zerkleinerten und gegebenenfalls angefeuchteten Ausgangsmaterials,
c. Homogenisieren und/oder Eindicken des gesamten, zumindest teilweise fermentierten Ausgangsmaterials, um eine portionierbare Masse zu erhalten, wobei im Verlauf des Eindickens und/oder Homogenisierens Pflanzenmaterial und/oder Pflanzenextrakt von Früchten von Sapindus mukorossi zugegeben wird; und
d. Portionieren des Produkts aus Schritt c zum Erhalt eines Mittels mit langanhaltender abschreckender Wirkung gegen Schnecken oder molluskizider Wirkung.
   Das Verfahren der vorliegenden Erfindung zur Herstellung eines Langzeitdüngers mit gleichzeitiger Abschreckwirkung gegen Schnecken oder molluskizider Wirkung umfasst die folgenden Schritte:

a. Zerkleinern von vorwiegend pflanzlichem Ausgangsmaterial;
b. Fermentieren von zumindest einem Teil des zerkleinerten und gegebenenfalls angefeuchteten Ausgangsmaterials,
c. Homogenisieren und/oder Eindicken des gesamten, zumindest teilweise fermentierten Ausgangsmaterials, um eine portionierbare Masse zu erhalten, wobei im Verlauf des Eindickens und/oder Homogenisierens Pflanzenmaterial und/oder Pflanzenextrakt von Früchten von *Sapindus mukorossi* und ein Düngemittel zugegeben werden; und
d. Portionieren des Produkts aus Schritt c zum Erhalt eines Langzeitdüngers mit gleichzeitiger abschreckender Wirkung gegen Schnecken oder molluskizider Wirkung.

Das Ausgangsmaterial wird vorzugsweise ausgewählt aus der Gruppe bestehend aus: pflanzlichen Materialien, insbesondere faserhaltige Materialien, vorzugsweise Zweige, Blätter, Nadeln, Wurzeln, Früchte, Stängel, Schalen, Schoten, Knollen, Blüten, Rinde, Holz, Mark, Gräser, Getreide, Unkraut, Fasern; tierischen Materialien, insbesondere tierisches Material, welches sich noch an/in dem pflanzlichen Material befindet, sowie Tierepithelien, insbesondere keratinhaltige Epithelien; sowie geringen Anteilen an mineralischen Bestandteilen, insbesondere Erde, Ton, Lehm, Sand; sowie Mischungen aus diesen.

Das Zerkleinern erfolgt nach dem Stand der Technik durch vorzugsweise Häckseln, Zermahlen und/oder Zerreiben.

Um ein geeignetes Produkt als Basis des Mittels bzw. Langzeitdüngers mit Abschreckwirkung gegen Schnecken oder molluskizider Wirkung zu erhalten, muss zumindest ein Teil des zerkleinerten Ausgangsmaterials fermentiert werden. Sind die Ausgangsmaterialien sehr trocken, so ist es vorteilhaft, sie vor der Fermentation anzufeuchten.

Vorzugsweise wird die Fermentation überwiegend anaerob durchgeführt.

Die Fermentation dauert vorzugsweise ca. 14 Tage, kann aber durch Anwendung von erhöhtem Druck und/oder erhöhter Temperatur beschleunigt werden. In Abhängigkeit vom eingesetzten Material, kann die Fermentation jedoch auch länger durchgeführt werden.

Die überwiegend anaerobe Fermentation des Ausgangsmaterials geschieht in geeigneter Weise durch Vergären, insbesondere Milchsäuregärung, Silieren, Kompostieren oder andere biologische Umsetzungen unter Beteiligung von Mischbiozönosen.

Die wenigstens überwiegend anaerobe durchgeführte Fermentation kann z.B. durch Verminderung des Sauerstoffpartialdruckes und/oder durch Sauerstoffentzug und/oder durch Beschickung mit einem nicht sauerstoffhaltigen Gas bzw. Gasgemisch, insbesondere Inertgas, vorzugsweise Stickstoff, durchgeführt werden. Hierbei sind erhöhter Druck und/oder erhöhte Temperatur bevorzugt.

Eine bevorzugte Ausführungsform der vorliegenden Erfindung ist es, nach der wenigstens überwiegend anaeroben Fermentation eine vorwiegend aerobe Nachbehandlung durchzuführen, welche in der Regel mindestens ca. 3 Monate lang durchgeführt wird.

Nach dem Fermentieren von zumindest einem Teil des Ausgangsmaterials wird das gesamte fermentierte und eventuell nicht fermentierte Ausgangsmaterial zusammen homogenisiert. Der Homogenisationsschritt kann zum Erhalt einer form- und/oder portionierbaren Masse bis zu ca. 10 Mal wiederholt werden, wobei die Masse bei Bedarf eingedickt wird. Das Eindicken kann entweder durch die Zugabe der nachfolgend genannten Zuschlagstoffe oder aber durch Wasserentzug erfolgen.

Der homogenisierten Masse können vor ihrer Weiterverarbeitung ein oder mehrere Zusatzstoffe zugesetzt werden, welche ausgewählt sind aus der Gruppe bestehend aus: mineralischen Füllstoffen, insbesondere Steinstaub, Thomasmehl und Tonmehlen, Schafwollstaub, pflanzlichen Füllstoffen wie Sägemehl und Holzspänen, Holzstaub, Brennnesseln, nachwachsenden Rohstoffen, Silagegut, Komposten, Altbrot, Holzasche, Faserstoffen, insbesondere Flachs, Bananenfaser, Kokos, Sisal und Baumfasern, Torf, Stärke, Ölen, Harzen, Zucker, Naturlatex-Stoffen sowie deren Mischungen.

Bevorzugt kann das Eindicken des Fermentationsprodukts durch Zugabe mindestens eines solchen Zuschlagsstoffes erfolgen.

Zusätzlich zu den Zuschlagsstoffen kann zum Eindicken auch ein Biokleber zugegeben werden, um die Festigkeit der Pellets zu steuern. Derartige Biokleber werden beispielsweise vom Erfinder der vorliegenden Erfindung in der Offenlegungsschrift DE 42 11 013 A1 beschrieben. Somit wird der Biokleber vorzugsweise auf Basis von Getreidemehl, Proteinen oder Harz oder einer Mischung davon hergestellt.

Durch die Menge an zugegebenem Biokleber kann auch die Langzeitwirkung des Düngers beeinflusst werden. Vorzugsweise wird der Biokleber in einer Menge von 1-10 Gew.-% des homogenisierten Produkts zugegeben. Weiter bevorzugt wird er in einer Menge von 5-10 Gew.-% zugegeben.

Die Früchte von Sapindus mukorossi werden im Rahmen der vorliegenden Erfindung in Form ihrer zerkleinerten Schalen und/oder als ethanolischer und/oder wässriger Extrakt der Früchte eingesetzt. Diese werden im Verlauf des Eindickens und/oder Homogenisierens zugegeben. Bei einer mehrmaligen Wiederholung des Homogenisierungsschrittes werden die Früchte von Sapindus mukorossi vorzugsweise vor dem letzten Homogenisierungsschritt zugegeben.

Die Früchte von Sapindus mukorossi werden dabei in einer Menge zugegeben werden, dass ihr Anteil in der portionierbaren Masse mindestens ungefähr 5 Gew.-% beträgt. Die Obergrenze des Anteils der Früchte von Sapindus mukorossi liegt bei vorzugsweise ungefähr 20 Gew.-% und weiter bevorzugt bei ungefähr 15 Gew.-%.

Anstelle der Zugabe einer bestimmten Menge an Früchten von Sapindus mukorossi kann auch ein Extrakt dieser Früchte zugegeben werden, der aus derselben Menge an Früchten hergestellt wurde. Wird ein derartiger Extrakt eingesetzt, kann dieser auch mit dem fertig homogenisierten Produkt vermischt werden.

Die Extrakte können wie folgt hergestellt werden:
a) Wässriger Extrakt: Zerkleinerte Früchte und/oder Schalen von Sapindus mukorossi werden 2 bis 3 h in Wasser gekocht und der Extrakt dann durch Filtration von der flüssigen Phase abgetrennt. Bei Bedarf kann der Extrakt dann z. B. durch Verdampfen eingeengt werden.
b) Ethanolischer Extrakt: Zerkleinerte Früchte und/oder Schalen von Sapindus mukorossi werden 1 bis 3 h in 96% Ethanol unter Rückfluss gekocht und der Extrakt dann durch Filtration von der flüssigen Phase abgetrennt. Bei Bedarf kann der Extrakt dann z. B. durch Verdampfen, insbesondere im Vakuumrotationsverdampfer, eingeengt werden.

Bei Bedarf können der portionierbaren Masse zur Erhöhung der schnecken- oder käferabweisenden Wirkung noch zusätzlich Pflanzenteile von Pfefferminze wie Pfefferminzblätter, Senfkornmehl sowie Storchschnabelgewächse, insbesondere roter Storchschnabel (Geranium sanguineum), letztere vorzugsweise in Form der ganzen Pflanzen, beigemischt werden. Es werden bevorzugt getrocknete Materialien eingesetzt, jedoch ist die Zugabe frischer Materialien in früheren Prozessstufen ebenfalls möglich.

Um einen Langzeitdünger mit gleichzeitiger Abschreckwirkung gegen Schnecken oder molluskizider Wirkung zu erhalten kann im Verlauf des Eindickens und/oder Homogenisierens zusätzlich ein Düngemittel zugegeben werden.

Als Düngemittel können tierische und/oder pflanzliche Materialien, die zum Düngen von Pflanzen geeignet sind, verwendet werden. Je nach verwendetem Material kann vor der Zugabe eine geeignete Aufbereitung notwendig sein. Dies kann beispielsweise eine Zerkleinerung umfassen, um das Zumischen des Materials zu erleichtern. Ferner kann das Material einem geeigneten Aufschlussverfahren unterzogen werden, um die enthaltenen Nährstoffe leichter zugänglich zu machen.

In einer bevorzugten Ausführungsform wird als das Düngemittel der Rückstand einer Biogasanlage verwendet.

Bevorzugt ist auch die Verwendung von Gülle, insbesondere von Rindergülle, entweder unfermentiert oder als Rückstand aus einer Biogasanlage.

Das als Düngemittel zugesetzte tierische und/oder pflanzliche Material kann ferner, falls notwendig, vor der Zugabe eingedickt werden. Vorzugsweise wird es dabei soweit eingedickt, dass eine portionierbare Masse erhalten wird, d. h. dass eine Masse mit einer Konsistenz erhalten wird, die beispielsweise mittels eines Extruders pelletiert werden kann.

### Hierzu kann mindestens einer der folgenden Stoffe zugegeben werden:

Holzstaub, Sägemehl, Rindenabfall, Baumnadeln, feingehäckseltes Stroh oder Heu, Strohstaub, zerkleinerte Fruchtkerne bzw. Fruchtkernschalen, körnige Kleie, Kaff, Stärke, zerkleinerte Frucht- oder Weinstiele, Trester, Ölkuchen, Altpapier in zerkleinerter Form, Papierstaub, Asche und Schafwolle.

Zu diesem Zweck können auch anorganische Materialien wie Steinstaub, Kalk, Lavastaub, Tonerden sowie deren Mischungen zugegeben werden.

Darüber hinaus können dem Düngemittel auch geeignete Mineralsalze zugegeben werden, um den zu düngenden Pflanzen eine optimale Zusammensetzung der zum Wachstum benötigten Nährstoffe und Spurenelemente zur Verfügung zu stellen.

Das geeignet aufbereitete und/oder eventuell eingedickte Düngemittel kann in einer Menge zugegeben werden, dass dessen Anteil in der portionierbaren Masse bis zu ungefähr 90 Gew.-% beträgt. Bevorzugt liegt dessen Anteil bei ungefähr 40-90 Gew.-%, weiter bevorzugt bei ungefähr 65-90 Gew.-%.

Bei dem erfindungsgemäßen Langzeitdünger ist das zerkleinerte und zumindest teilweise fermentierte, vorwiegend pflanzliche Ausgangsmaterial, nach dem Homogenisieren und/oder Eindicken, in der portionierbaren Masse in einer Menge von mindestens ungefähr 4 Gew.-% enthalten und kann ferner bis zu ungefähr 50 Gew.-% ausmachen. Durch den Anteil dieser Komponente kann die "Langzeitwirkung" des schneckenabweisenden Langzeitdüngers gesteuert werden. Bei einem Anteil von weniger als 4 Gew.-% werden das Düngemittel und der Wirkstoff der Früchte von *Sapindus mukorossi* relativ schnell freigesetzt und ist die Langzeitwirkung somit zu gering. Bei einem Anteil von über 50 Gew.-% ist die Freisetzung von vor allem dem Düngemittel so stark verzögert, dass die damit zu düngenden Pflanzen für das momentane Wachstum zu wenige Nährstoffe enthalten. Allerdings kann mit einem derart stark verzögert freisetzenden Langzeitdünger eine Düngung über mehrere Fruchtfolgen erreicht werden.

Für die Düngung von bereits im Wachstum befindlichen Pflanzen ist daher ein Anteil des zerkleinerten und zumindest teilweise fermentierten, vorwiegend pflanzlichen Ausgangsmaterials, nach dem Homogenisieren und/oder Eindicken, in der portionierbaren Masse in einer Menge von ungefähr 5-20 Gew.-% bevorzugt, weiter bevorzugt von ungefähr 5-15 Gew.-%.

Es wird darauf hingewiesen, dass die vorliegende Erfindung nicht auf die in Anspruch 1 und 2 angegebene Reihenfolge der Verfahrensschritte beschränkt ist, sondern auch eine andere geeignete Reihenfolge mitumfasst. So können beispielsweise das Pflanzenmaterial von *Sapindus mukorossi* bzw. das Düngemittel unabhängig voneinander auch nach dem Homogenisieren oder vor dem Fermentieren zugegeben werden.

Zum Portionieren des eingedickten Fermentationsprodukts kann jede dazu geeignete Vorrichtung verwendet werden. So ist es beispielsweise möglich, eine Pelletierpresse zu verwenden. Auch ist es möglich, einen geeigneten Extruder, z.B. einen solchen mit einem Lochblech, einzusetzen.

Es ist bevorzugt, die homogenisierte Masse durch Pelletieren zu portionieren oder daraus ein Granulat herzustellen.

Nach dem Portionieren wird das Produkt, falls notwendig, bis zu einem Restfeuchtegehalt getrocknet, der eine einfache Handhabung und stabile Lagerung ermöglicht. Bevorzugt ist ein Restfeuchtegehalt von 6-15%.

Das schneckenabweisende Mittel bzw. der Langzeitdünger kommen bevorzugt in Form von Pellets oder als Granulat zu Einsatz. Um die schneckenabweisende Wirkung optimal zur Geltung zu bringen, werden die Pellets um die vor Schneckenfraß zu schützenden und eventuell auch zu düngenden Pflanzen am besten ringförmig auf dem Boden ausgelegt. Die Düngestoffe und die molluskiziden Wirkstoffe werden aufgrund der Vermischung mit dem zumindest teilweise fermentierten Ausgangsmaterial durch Witterung und Gießen nur langsam aus den Pellets freigesetzt und sichern so für die Dauer der Wachstumsperiode einen wirksamen Schutz vor Schneckenfraß bei gleichzeitiger Langzeitdüngung.

Somit stellt die vorliegende Erfindung erstmals ein nichtchemisches Mittel bzw. einen nichtchemischen Langzeitdünger mit Wirkung gegen Schnecken oder als Molluskizid zur Verfügung, welche nach den erfindungsgemäßen Verfahren erhältlich sind.

Weitere Vorteile und Merkmale der vorliegenden Erfindung ergeben sich aufgrund der Beschreibung der nachfolgenden Ausführungsbeispiele.

### Ausführungsbeispiel 1

20 kg gehäckselter Mais, 10 kg gehäckselte Zweige und 10 kg Gras wurden vermischt und in einen Plastiksack gefüllt. Der Plastiksack wurde zur anaeroben Fermentation unter Anlegung von Unterdruck evakuiert und luftdicht verschlossen. Nach 14 Tagen wurde die erhaltene faserhaltige und torfartige Masse 10 mal homogenisiert. Die Ausbeute an verarbeitbarer Masse betrug ca. 20 kg. Zu der Masse wurden ca. 2 kg zerkleinerte Schalen der Früchte von Sapindus mukorossi gegeben und mit der Masse verknetet. Die Masse wurde dann mit einem Schneckenextruder bei einem Druck von ca. 1400 kg/cm² durch eine Lochplatte zu Pellets gepresst. Die Pellets wurden während zwei Tagen auf Sieben an der Luft getrocknet und dann in Säcke verpackt und gelagert.

### Ausführungsbeispiel 2

20 kg gehäckselter Mais, 10 kg gehäckselte Zweige und 10 kg Gras wurden vermischt und in einen Plastiksack gefüllt. Der Plastiksack wurde zur anaeroben Fermentation unter Anlegung von Unterdruck evakuiert und luftdicht verschlossen. Nach 14 Tagen wurde die erhaltene faserhaltige und torfartige Masse 10 mal homogenisiert. Die Ausbeute an verarbeitbarer Masse betrug ca. 20 kg. Zu der Masse wurden ca. 2 kg zerkleinerte Schalen der Früchte von Sapindus mukorossi sowie 0,5 kg getrockneter, zerkleinerter Roter Storchschnabel gegeben und mit der Masse verknetet. Die Masse wurde dann mit einem Schneckenextruder wie in Ausführungsbeispiel 1 pelletiert, getrocknet und gelagert.

### Ausführungsbeispiel 3

20 kg Blätter und 20 kg gehäckselte Zweige wurden vermischt und in eine Tonne gefüllt. Die Tonne wurde mit einem Deckel verschlossen und die in der Tonne enthaltene Luft wurde herausgedrückt, worauf die Tonne luftdicht verschlossen wurde. Nach drei Wochen langer anaerober Fermentierung wurde die Tonne geöffnet, deren Inhalt in eine gut belüftete Kiste umgeschüttet und drei Monate lang stehen gelassen um eine aerobe Nachbehandlung zu durchlaufen. Anschließend wurde die Masse fünfmal homogenisiert. Die Ausbeute an verarbeitbarer Masse betrug ca. 15 kg. Das nach der aeroben Anschluss-Fermentation zurückgebliebene Fermentationsprodukt wird durch Zugabe von 1 Gew.-% Steinmehl und 1 Gew.-% eines Bioklebers auf Basis von Weizenstärke eingedickt, dann ca. 10 Gew.-% an Schalen der Früchte von Sapindus mukorossi zugegeben und die gesamte Masse mittels eines Extruders wie in Beispiel 1 zu Pellets verarbeitet und bis auf einen Restfeuchtegehalt von ca. 6-15 Gew.-% getrocknet, um ein Mittel mit langanhaltender Abschreckwirkung gegen Schnecken zu erhalten.

Die auf diese Weise hergestellten Pellets können nach dem Abpacken direkt in den Handel gebracht werden und lassen sich in dieser Form sowohl lange lagern als auch gut dosieren.

### Ausführungsbeispiel 4

Rindergülle wurde durch Zugabe von Sägemehl, Holzstaub, Steinstaub, Asche und Schafwolle soweit eingedickt, dass eine extrudierbare Masse erhalten wurde. Zu dieser Masse wurden 10 Gew.-% der in Ausführungsbeispiel 1 nach der Fermentation erhaltenen, verarbeitbaren Masse und 10 Gew.-% an zerkleinerten Schalen der Früchte von Sapindus mukorossi gegeben, alles miteinander verknetet und wie in Ausführungsbeispiel 1 zu Pellets verarbeitet und getrocknet, um einen Langzeitdünger mit Abschreckwirkung gegen Schnecken zu erhalten.

Bei Freilandversuchen mit dem erfindungsgemäßen Langzeitdünger mit Abschreckwirkung gegen Schnecken hat sich herausgestellt, dass "Lieblingspflanzen" der üblichen Gartenschnecken wie z.B. das Kreuzkraut (Senecio cruentus) und Eremurus-Arten, welche mit dem erfindungsgemäßen Kombidünger durch Aufstreuen auf den die Pflanzen umgebenden Boden wirksam gegen Schneckenfraß geschützt sind. Überraschend hat sich auch herausgestellt, dass die abschreckende Wirkung sich auch auf andere Schädlinge wie z.B. das Lilienhähnchen (Lilioceris lilii), ein 6-8 mm großer Käfer aus der Familie der Blattkäfer (*Chrysomelidae*) mit lackroten Flügeldecken, erstreckt.

## Patentansprüche

1. Verfahren zur Herstellung eines Mittels mit langanhaltender Abschreckwirkung gegen Schnecken oder molluskizider Wirkung auf Basis von vorwiegend pflanzlichem Material, mit folgenden Schritten:
a. Zerkleinern von vorwiegend pflanzlichem Ausgangsmaterial;
b. Fermentieren von zumindest einem Teil des zerkleinerten und gegebenenfalls angefeuchteten Ausgangsmaterials,
c. Homogenisieren und/oder Eindicken des gesamten, zumindest teilweise fermentierten Ausgangsmaterials, um eine portionierbare Masse zu erhalten, wobei im Verlauf des Eindickens und/oder Homogenisierens Pflanzenmaterial und/oder Pflanzenextrakt von Früchten von *Sapindus mukorossi* zugegeben wird; und
d. Portionieren des Produkts aus Schritt c zum Erhalt eines Mittels mit langanhaltender abschreckender Wirkung gegen Schnecken oder molluskizider Wirkung.

2. Verfahren zur Herstellung eines Langzeitdüngers mit gleichzeitiger Abschreckwirkung gegen Schnecken oder molluskizider Wirkung, mit folgenden Schritten:
a. Zerkleinern von vorwiegend pflanzlichem Ausgangsmaterial;
b. Fermentieren von zumindest einem Teil des zerkleinerten und gegebenenfalls angefeuchteten Ausgangsmaterials,
c. Homogenisieren und/oder Eindicken des gesamten, zumindest teilweise fermentierten Ausgangsmaterials, um eine portionierbare Masse zu erhalten, wobei im Verlauf des Eindickens und/oder Homogenisierens Pflanzenmaterial und/oder Pflanzenextrakt von Früchten von *Sapindus mukorossi* und ein Düngemittel zugegeben werden; und
d. Portionieren des Produkts aus Schritt c zum Erhalt eines Langzeitdüngers mit gleichzeitiger abschreckender Wirkung gegen Schnecken oder molluskizider Wirkung.

3. Verfahren nach Anspruch 1 oder 2, **dadurch gekennzeichnet, dass** das Ausgangsmaterial ausgewählt wird aus der Gruppe bestehend aus: pflanzlichen Materialien, insbesondere faserhaltige Materialien, vorzugsweise Zweige, Blätter, Nadeln, Wurzeln, Früchte, Stängel, Schalen, Schoten, Knollen, Blüten, Rinde, Holz, Mark, Gräser, Getreide, Unkraut, Fasern; tierischen Materialien, insbesondere tierisches Material, welches sich noch an/in dem pflanzlichen Material befindet, sowie Tierepithelien, insbesondere keratinhaltige Epithelien; sowie geringen Anteilen an mineralischen Bestandteilen, insbesondere Erde, Ton, Lehm, Sand; sowie Mischungen aus diesen.

4. Verfahren nach einem der vorherigen Ansprüche, **dadurch gekennzeichnet, dass** die Fermentation bei erhöhtem Druck und/oder erhöhter Temperatur durchgeführt wird.

5. Verfahren nach einem der vorherigen Ansprüche, **dadurch gekennzeichnet, dass** die Fermentation überwiegend anaerob durchgeführt wird.

6. Verfahren nach Anspruch 5, **dadurch gekennzeichnet, dass** nach der überwiegend anaeroben Fermentation eine vorwiegend aerobe Nachbehandlung durchgeführt wird.

7. Verfahren nach Anspruch 6 **dadurch gekennzeichnet, dass** die aerobe Nachbehandlung mindestens ca. 3 Monate lang durchgeführt wird.

8. Verfahren nach einem der vorherigen Ansprüche, **dadurch gekennzeichnet, dass** das Eindicken des gesamten, zumindest teilweise fermentierten Ausgangsmaterials durch Zugabe mindestens eines der folgenden Zuschlagsstoffe durchgeführt wird: mineralische Füllstoffe, insbesondere Steinstaub, Thomasmehl und Tonmehle, Schafwollstaub, pflanzliche Füllstoffe wie Sägemehl und Holzspäne, Holzstaub, Brennnessel, nachwachsende Rohstoffe, Silagegut, Komposte, Altbrot, Holzasche, Faserstoffe, insbesondere Flachs, Bananenfaser, Kokos, Sisal und Baumfaser, Torf, Stärke, Öle, Harze, Zucker, Naturlatex-Stoffe sowie deren Mischungen und dass beim Eindicken gegebenenfalls ein Biokleber zugegeben wird, der auf Basis von Getreidemehl, Proteinen oder Harz oder einer Mischung davon hergestellt ist und dass dieser Biokleber vorzugsweise in einer Menge von ca. 1-10 Gew.-% des zumindest teilweise fermentierten Ausgangsmaterials zugegeben wird.

9. Verfahren nach einem der vorherigen Ansprüche, **dadurch gekennzeichnet, dass** die Früchte von Sapindus mukorossi in Form ihrer zerkleinerten Schalen und/oder als ethanolischer und/oder wässriger Extrakt der Früchte zugegeben werden, wobei die Früchte von Sapindus mukorossi vorzugsweise in einer Menge zugegeben werden, dass ihr Anteil in der portionierbaren Masse mindestens ungefähr 5 Gew.-% beträgt, beziehungsweise dass der zugegebene Extrakt vorzugsweise aus der entsprechenden Menge an Früchten hergestellt wurde.

10. Verfahren nach einem der vorherigen Ansprüche, **dadurch gekennzeichnet, dass** zur Erhöhung der schnecken- oder käferabweisenden Wirkung der portionierbaren Masse noch zusätzlich Pfefferminzblätter, Senfkornmehl sowie Storchschnabelgewächse, insbesondere roter Storchschnabel (*Geranium sanguineum*), letztere vorzugsweise in Form der ganzen Pflanzen, beigemischt werden.

11. Verfahren nach einem der Ansprüche 2 bis 10, **dadurch gekennzeichnet, dass** als das Düngemittel geeignet aufbereitete tierische und/oder pflanzliche Materialien wie beispielsweise der Rückstand einer Biogasanlage oder Gülle bzw. fermentierte Gülle, insbesondere Rindergülle, zugegeben werden.

12. Verfahren nach einem der Ansprüche 2 bis 11, **dadurch gekennzeichnet, dass** der Anteil an Düngemittel in der portionierbaren Masse bis zu ungefähr 90 Gew.-% beträgt.

13. Verfahren nach einem der vorherigen Ansprüche, **dadurch gekennzeichnet, dass** das portionierte Produkt auf einen Restfeuchtegehalt von ca. 6-15 Gew.-% getrocknet wird.

14. Mittel mit langanhaltender Abschreckwirkung gegen Schnecken oder molluskizider Wirkung, erhältlich nach einem Verfahren gemäß einem der Ansprüche 1, 3-10 oder 13.

15. Langzeitdünger mit gleichzeitiger Abschreckwirkung gegen Schnecken oder molluskizider Wirkung, erhältlich nach einem Verfahren gemäß einem der Ansprüche 2 bis 13.
